# EUROPÄISCHE PATENTANMELDUNG

(11) **EP 2 239 474 A1**
(43) Veröffentlichungstag der Anmeldung: **13.10.2010**
(21) Anmeldenummer: 10157552.0
(22) Anmeldetag: 24.03.2010
(51) Int. Cl.: F16C 33/78, F16J 15/32

(54) **Dichteinrichtung mit Filter**

(30) Priorität: 08.04.2009 DE 102009016900
(71) Anmelder: Schaeffler Technologies GmbH & Co. KG, 91074 Herzogenaurach (DE)
(72) Erfinder: Schäfer, Marc-André, 97532, Uechtelhausen (Zell) (DE)

(57) **Zusammenfassung**

Die Erfindung betrifft eine Dichteinrichtung (1) für ein Wälzlager mit einem Versteifungsring (2) und einem Laufring (3), die im Wesentlichen einen L-förmigen Querschnitt aufweisen und einen Ringraum (8) bilden, wobei in dem Ringraum (8) eine an dem Versteifungsring (2) fest angeordnete und gegenüber dem Laufring (3) mittels einer auf einer Dichtfläche (12) des Laufrings (3) umlaufenden Dichtlippe (11) abdichtende elastische Dichtung (10) und zwischen dem Versteifungsring (2) und dem Laufring (3) ein den Ringraum (8) begrenzender ringförmiger Dichtspalt (9, 9a, 9b) vorgesehen ist. Um insbesondere die Dichtlippe und eine gegebenenfalls diese radial belastende Ringfeder gegen Beschädigung durch über den Dichtspalt (9) eingetragene Verschmutzung bei verbleibendem Druckausgleich zwischen Ringraum und Umgebung zu schützen, wird vorgeschlagen, den Dichtspalt (9) mittels eines ringförmigen Tiefenfilters (15), der an einer axialen Ausprägung (5) des Versteifungsrings (2) nach radial außen abgestützt ist, luftdurchlässig zu verschließen.

## Beschreibung

Die Erfindung betrifft eine Dichteinrichtung für ein Wälzlager mit einem Versteifungsring und einem Laufring, die im Wesentlichen einen L-förmigen Querschnitt aufweisen und einen Ringraum bilden, wobei in dem Ringraum eine an dem Versteifungsring fest angeordnete und gegenüber dem Laufring mittels einer auf einer Dichtfläche des Laufrings umlaufenden Dichtlippe abdichtende elastische Dichtung und zwischen dem Versteifungsring und dem Laufring ein den Ringraum begrenzender ringförmiger Dichtspalt vorgesehen ist.

### Hintergrund der Erfindung

Eine gattungsgemäße Dichteinrichtung ist aus der DE 10 2007 034 812 A1 bekannt. Hierbei werden ein im Querschnitt L-förmiger Versteifungsring und ein Laufring so angeordnet, dass sich ein Ringraum mit einem Dichtspalt nach außen bildet. In dem Ringraum ist an dem Versteifungsring eine Dichtung angeordnet, die mittels einer axial wirksamen Dichtlippe durch den Dichtspalt eintretendes Wasser und Schmutzpartikel von der radial gegenüber der axialen Ausprägung des dem Versteifungsrings gegenüberliegenden Laufrings abdichtenden Hauptlippe fernhält. Auf diese Weise kann die Hauptlippe über die gesamte Lebensdauer der Dichteinrichtung vor Verschleiß geschützt werden. Die axial zu der Hauptlippe beabstandete Fettlippe dichtet das durch die Dichteinrichtung vor Verschmutzung und Wasser geschützte Wälzlager gegen Schmiermittelverlust ab, indem die Fettlippe gegen den Innenring des Wälzlagers abdichtet.

Dabei ist der Ringraum nicht gegen Zutritt von Schmutzpartikeln geschützt, die über den Dichtspalt eintreten und sich in dem Ringraum vor der axial wirksamen Dichtlippe anreichern. Weiterhin erhöht diese Dichtlippe die Reibung der Dichteinrichtung und erfordert axialen Bauraum. Insbesondere bei axial schmal bauenden Dichteinrichtungen muss daher auf eine axiale Dichtlippe verzichtet werden, wodurch die radial wirksame Dichtlippe nicht tolerierbarem Verschleiß unterworfen wird.

Die deutsche Gebrauchsmusterschrift G 94 00 995 U1 offenbart eine Dichteinrichtung mit einer Labyrinth-Dichtung, bei der über mehrere hintereinander folgende und teilweise axial beabstandete Dichtspalte eine Dichtung mit Dichtlippe folgt. Der Dichtung axial benachbart folgt ein Filzring, der beidseitig axial von zwei Fettkammern umgeben ist. Der Filzring hat auf eine gegebenenfalls über die Dichtspalte eintretende Verschmutzung keinen schützenden Einfluss. Weiterhin weist die offenbarte Dichteinrichtung einen enormen axialen Bauraumbedarf auf.

### Aufgabe der Erfindung

Es ergibt sich daher die Aufgabe, eine Dichteinrichtung vorzuschlagen, die gegen Verschleiß der radial dichtenden Lippe geschützt ist und axial schmalbauend ausgeführt ist.

### Beschreibung der Erfindung

Diese Aufgabe wird durch eine Dichteinrichtung für ein Wälzlager mit einem Versteifungsring und einem Laufring, die im Wesentlichen einen L-förmigen Querschnitt aufweisen und einen Ringraum bilden, gelöst, wobei in dem Ringraum eine an dem Versteifungsring fest angeordnete und gegenüber dem Laufring mittels einer auf einer Dichtfläche des Laufrings umlaufenden Dichtlippe abdichtende elastische Dichtung und zwischen dem Versteifungsring und dem Laufring ein den Ringraum begrenzender ringförmiger Dichtspalt vorgesehen ist. Erfindungsgemäß wird dabei der Dichtspalt mittels eines ringförmigen Tiefenfilters verschlossen.

Durch die Auswahl eines Tiefenfilters mit einer entsprechenden Dicke, Porenweite und dergleichen bleibt der Dichtspalt luftdurchlässig, so dass ein Druckausgleich zwischen dem Ringraum und der Umgebung stets erhalten bleibt, so dass die Dichtlippe nicht durch gegebenenfalls auftretenden Unterdruck in dem Ringraum von seiner Dichtfläche abgehoben und undicht wird. Das Tiefenfilter ist bezüglich seiner Porenweite so ausgelegt, dass Verschmutzung, beispielsweise in Form von abrasivem Sand, Schmutzpartikeln und dergleichen, in der Tiefe des Tiefenfilters zurückgehalten wird und damit über Lebensdauer eine lebensdauerverkürzende Zusetzung an der Oberfläche vermieden wird. Dabei kann bei nicht hydrophobisierten Tiefenfiltern Wasser durch den Tiefenfilter hindurchtreten, das von der Dichtlippe an einem Eintreten in das Drehlager gehindert wird. Infolge der Filterung des Wassers durch das Tiefenfilter ist das Eintreten von Wasser in dem Ringraum unschädlich und kann toleriert werden. Ist der Dichtspalt radial außen am Ringraum angeordnet, wird das eingetretene Wasser fliehkraftabhängig nahezu vollständig wieder ausgetrieben.

Das Tiefenfilter stützt sich in vorteilhafter Weise radial an einer axialen Ausprägung des Versteifungsrings ab. Die Reibung eines schwimmend gelagerten Tiefenfilters gegenüber Versteifungsring und Laufring beziehungsweise die Reibung eines an einem von diesen fest angeordneten Tiefenfilters gegenüber dem anderen Ringteil wie Laufring oder Versteifungsring ist vernachlässigbar, so dass die Reibung der Dichteinrichtung durch die Verwendung eines Tiefenfilters nicht wesentlich beeinflusst wird.

Das Tiefenfilter kann aus Faserstoffen mit Fasern aus Kunststoff, Draht und/oder Naturstoffen hergestellt, beispielsweise gepresst sein. Es hat sich als besonders vorteilhaft erwiesen, wenn das Tiefenfilter aus Filz hergestellt ist. Dabei kann der Tiefenfilter in axiale Richtung formstabil ausgestaltet sein, so dass unter Fliehkrafteinwirkung kein oder nur ein vernachlässigbares Ausweichen in axiale Richtung auftritt und damit der Tiefenfilter die beiden Ringteile, zwischen denen er angeordnet ist, nicht unter Ausbildung erhöhter Reibung axial verspannt.

Der Dichtspalt kann abhängig von der Ausgestaltung der Ringteile radial außen oder in axiale Richtung ausgebildet sein. Die radiale Ausrichtung erlaubt dabei eine schnelle Entwässerung des Ringraums, während die axiale Ausrichtung einen besseren Schutz vor vertikalem Schmutz- und Wassereintrag bietet. Vor den Dichtspalten kann aus einem getrennten Bauteil oder einem der Ringteile ein zu dem Dichtspalt abgewinkelter Ansatz vorgesehen sein, der einen labyrinthartigen Verschluss des Dichtspalts vorsieht.

Der Tiefenfilter kann als Formstück ausgebildet sein, wobei dieser sich zumindest in einen Teil eines vom Dichtspalt gebildeten Dichtspaltvolumens erstreckt. So kann beispielsweise je nach Ausrichtung des Dichtspalts das ringförmige Tiefenfilter einen radial oder axial erweiterten wie angeformten Ansatz aufweisen, der sich in den Dichtspalt erstreckt und diesen zumindest teilweise in einer luftdurchlässigen aber für Partikel undurchlässigen Weise verschließt. Weiterhin kann der in den Dichtspalt reichende Ansatz des Tiefenfilters auch erst während der Montage durch entsprechendes Verdichten des Tiefenfilters erfolgen.

Die Dichteinrichtung kann weiterhin eine zumindest an einem der beiden Ringteile - Versteifungsring oder Laufring - im Anlagebereich des Tiefenfilters an dessen den Dichtspalt bildenden Umfang in Richtung des Ringraums umgelegte Anformung aufweisen, die in eine zu dieser komplementären Ringnut des Tiefenfilters eingreift.

Nach einem besonders vorteilhaften Ausführungsbeispiel ist zumindest die radial wirksame Dichtlippe in Form der gegenüber der axialen Ausprägung des Laufrings mittels einer Ringfeder vorgespannt, die radial außerhalb der Dichtlippe an der Dichtung unter radialer Vorspannung angelegt oder in diese integriert ist und damit die Dichtung gegenüber ihrer Dichtlippe vorspannt. In besonders vorteilhafter Weise hat sich dabei die Verwendung eines Tiefenfilters erwiesen, da sich durch den Dichtspalt eindringender Schmutz negativ auf die feinen Federwindungen auswirken kann, indem diese in ihrer Bewegung eingeschränkt und abrasiv angegriffen werden, so dass diese Korrosion ausgesetzt werden und schließlich abbrechen und damit ihre Wirkung verlieren. Eine Oberflächenbehandlung der Ringfeder kann die Korrosion der Ringfeder gegebenenfalls effektiv verzögern, bedeutet jedoch zusätzlichen Kosten- und Herstellungsaufwand. Tritt nur durch den Tiefenfilter von Verschmutzungen gereinigtes Wasser ein, besteht eine Beschädigung der Ringfeder infolge fehlender Abrasion in auf Lebensdauer der Dichteinrichtung betrachteten Zeiträumen nicht.

In vorteilhafter Weise kann neben der sogenannten, oben beschriebenen Hauptlippe eine sogenannte Fettlippe einteilig an der Dichtung vorgesehen sein, die axial benachbart zu der Dichtlippe angeordnet ist und mit einem Innenring des Wälzlager einen Dichtkontakt bildet, der vorzugsweise radial wirksam ist.

Im Weiteren kann nach dem erfinderischen Gedanken ein zwischen dem Tiefenfilter und der Hauptlippe verbleibendes Volumen des Ringraumes zumindest teilweise mit Schmiermittel, beispielsweise Fett befüllt sein. Dadurch kann neben dem Ausschluss von Schmutzpartikeln durch das Tiefenfilter auch Wasser ausgeschlossen werden, insbesondere wenn das Volumen vollständig mit Fett befüllt ist. Zumindest wird eine längere Dichtstrecke von dem Innenumfang des Tiefenfilters zu der gegebenenfalls vorhandenen Ringfeder und zur Hauptlippe bereitgestellt. Das Tiefenfilter kann dabei ebenfalls mit Fett getränkt sein. Um das Austreten von Fett bei Druckunterschieden zwischen Ringraum und Umgebung sicher zu verhindern, wird auf ein Tränken des Tiefenfilters verzichtet. bung sicher zu verhindern, wird auf ein Tränken des Tiefenfilters verzichtet. Um dennoch ein einfaches Eintreten von Wasser in den Tiefenfilter zumindest zu erschweren, kann der Tiefenfilter aus hydrophoben Materialien hergestellt sein. Alternativ können gewöhnliche Materialien mit hydrophoben Materialien beschichtet oder der Tiefenfilter mit diesen getränkt sein.

### Kurze Beschreibung der Zeichnungen

Die Erfindung wird anhand der in den Figuren 1 bis 4 gezeigten Ausführungsbeispiele näher erläutert. Dabei zeigen:
- Figur 1: einen Teilschnitt durch eine erfindungsgemäße Dichteinrichtung mit einem Tiefenfilter an einem axial ausgerichteten Dichtspalt,
- Figur 2: eine der Dichteinrichtung der Figur 1 ähnliche Dichteinrichtung mit radial ausgerichtetem Dichtspalt,
- Figur 3: eine der Dichteinrichtung der Figur 2 ähnliche Dichteinrichtung mit geändertem Dichtspalt
und
- Figur 4: eine den Dichteinrichtungen der Figuren 1 bis 3 ähnliche Dichteinrichtung mit Fettbefüllung.

### Ausführliche Beschreibung der Zeichnungen

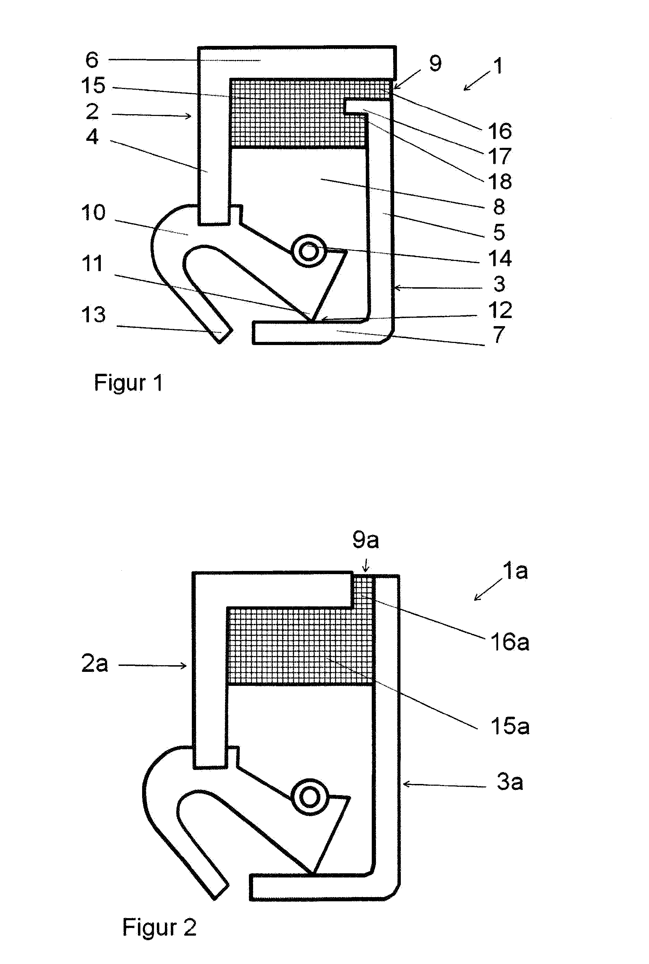

Figur 1 zeigt die ringförmig ausgebildete Dichteinrichtung 1 im Teilschnitt, wobei nur der obere Teil der um eine Drehachse eines nicht dargestellten Drehlagers angeordneten Dichteinrichtung dargestellt ist. Die Dichteinrichtung 1 kann beispielsweise radial zwischen einem Außenring und einem Innenring des als Wälzlager ausgebildeten Drehlagers angeordnet sein und axial in dieses integriert oder als axialer Vorbau ausgestattet sein.

Die Dichteinrichtung 1 ist aus einem Versteifungsring 2 und einem zu diesem versdrehbaren Laufringen 3 gebildet, die im Querschnitt L-förmig ausgebildet sind und jeweils eine radiale Ausprägung 4, 5 und eine axiale Ausprägung 6, 7 aufweisen. Versteifungsring 2 und Laufring 3 sind zu einander kassettenartig angeordnet und schließen einen Ringraum 8 ein, der durch einen ringförmigen Dichtspalt 9 mit der Umgebung in Verbindung steht. Der Versteifungsring 2 ist daher dem Wälzlager zugewandt und der Laufring 3 diesem abgewandt. Dementsprechend sind der Versteifungsring 2 mit dem Außenring des Wälzlagers und der Laufring 3 mit dem Innenring des Drehlagers drehfest verbunden.

An dem Innenumfang der radialen Ausprägung 4 des Versteifungsrings 2 ist eine Dichtung 10 angebracht, beispielsweise anvulkanisiert. Die Dichtung 10 weist eine nach radial innen gerichtete, umlaufende Dichtlippe 11, eine sogenannte Hauptlippe auf, die einen dynamischen Dichtkontakt zu der Dichtfläche 12 am Innenumfang der axialen Ausprägung 7 des Laufrings 3 bildet. Axial beabstandet zu der Dichtlippe 11 ist eine weitere Dichtlippe 13 als sogenannte Fettlippe vorgesehen, die mit dem nicht dargestellten Innenring des Wälzlagers einen dynamischen Dichtkontakt bildet. Radial außerhalb der Dichtlippe 11 ist die Ringfeder 14, die als über den Umfang als geschlossener Ring ausgeführte Schraubenfeder ausgebildet sein kann, unter Vorspannung an die Dichtung 10 angelegt oder in diese integriert. Sie verspannt die Dichtlippe 11 radial gegenüber der Dichtfläche 12.

Der von der Stirnseite der axialen Ausprägung 6 und dem Außenumfang der radialen Ausprägung 5 gebildete Dichtspalt 9 wird durch das ringförmige Tiefenfilter 15 verschlossen. Das aus Fasern verdichtete, beispielsweise aus Filz hergestellte Tiefenfilter 15 ist bezüglich seiner Porosität so ausgelegt, dass durch den Dichtspalt eingetragene Verschmutzungsteilchen dauerhaft ausgefiltert werden, ohne einen Druckausgleich zwischen dem Ringraum und der Umgebung über Lebensdauer zu behindern. Auf diese Weise werden über Lebensdauer die Ringfeder 14, die Dichtlippe 11 und deren Dichtfläche 12 wirksam vor abrasiven Einwirkungen geschützt, so dass ein entsprechender Verschleiß und eine dadurch bedingte Beschädigung dauerhaft unterbleibt.

Der Tiefenfilter 15 stützt sich radial am Innenumfang der axialen Ausprägung 6 ab und weist eine axiale Erweiterung 16 in den Dichtspalt 9 auf, so dass der Tiefenfilter 15 im Wesentlichen mit der Außenfläche der radialen Ausprägung 5 abschließt. Der Außenumfang der radialen Ausprägung 5 weist einen in Richtung des Ringraums 8 umgelegten axialen Ansatz 17 auf, der in eine Ringnut 18 des Tiefenfilters eingreift.

Figur 2 zeigt in Abänderung zu der Dichteinrichtung 1 der Figur 1 eine Dichteinrichtung 1a mit einem Versteifungsring 2a und einem Laufring 3a, die einfach ausgebildet und im Querschnitt L-förmigen sind und einen Dichtspalt 9a ausbilden, der in radiale Richtung ausgerichtet ist. Infolgedessen weist der Tiefenfilter 15a eine radial sich in den Dichtspalt 9a erstreckende Erweiterung 16a auf.

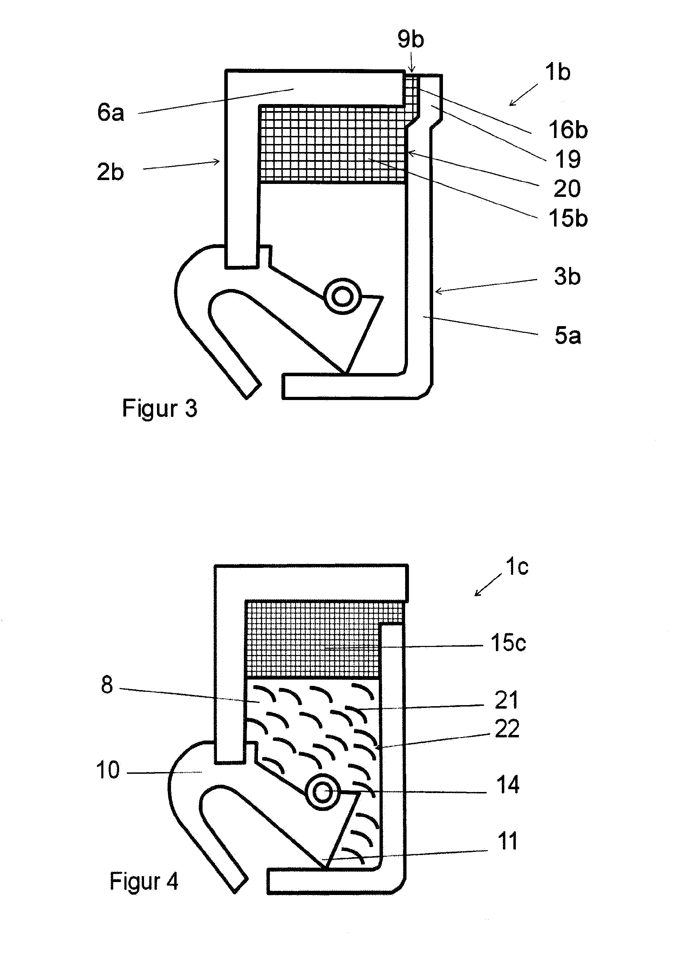

Figur 3 zeigt eine gegenüber der Dichteinrichtung 1a der Figur 2 leicht modifizierte Dichteinrichtung 1 b mit einem Laufring 3b, der an seinem Außenumfang einen gegenüber der radialen Ausprägung 5a axial erweiterten Ringbund 19 aufweist. Infolgedessen ist die axiale Ausprägung 6a des Versteifungsrings 2b zur Einstellung des gewünschten Dichtspalts 9b axial erweitert. Entsprechend ist das Tiefenfilter 15b zur Anlage an den Innenflächen der beiden Ringteile, nämlich dem Versteifungsring 2b und dem Laufring 3b axial verbreitert. Die in den Dichtspalt 9b erweiterte Erweiterung 16b des Tiefenfilters 15b ist dabei axial außerhalb des an der axialen Ausprägung 5a anliegenden Außenumfang 20 des Tiefenfilters angeordnet.

Figur 4 zeigt eine mit den Dichteinrichtungen 1, 1a, 1b ähnliche Dichteinrichtung 1c, die im Unterschied zu diesen eine Fettfüllung 21 aufweist, die in das von dem Tiefenfilter 15c und der Dichtung 10 mit der Dichtlippe 11 begrenzte Füllvolumen 22 des Ringraums 8 eingebracht ist. Durch die Fettfüllung 21 wird ein Zutritt von Feuchtigkeit insbesondere zur Ringfeder 14 vermieden beziehungsweise zumindest erschwert, so dass diese zusätzlich gegen Korrosion durch eindringendes Wasser geschützt ist, so dass der Werkstoff der Ringfeder 14 ausschließlich an die Federeigenschaften zur Vorspannung der Dichtlippe 11 ausgewählt werden kann. Eine gegebenenfalls vorzunehmende Beschichtung gegen Korrosion kann entfallen.

### Bezugszeichenliste

- 1: Dichteinrichtung
- 1a: Dichteinrichtung
- 1b: Dichteinrichtung
- 1c: Dichteinrichtung
- 2: Versteifungsring
- 2a: Versteifungsring
- 2b: Versteifungsring
- 3: Laufring
- 3a: Laufring
- 3b: Laufring
- 4: radiale Ausprägung
- 5: radiale Ausprägung
- 5a: radiale Ausprägung
- 6: axiale Ausprägung
- 6a: axiale Ausprägung
- 7: axiale Ausprägung
- 8: Ringraum
- 9: Dichtspalt
- 9a: Dichtspalt
- 9b: Dichtspalt
- 10: Dichtung
- 11: Dichtlippe
- 12: Dichtfläche
- 13: Dichtlippe
- 14: Ringfeder
- 15: Tiefenfilter
- 15a: Tiefenfilter
- 15b: Tiefenfilter
- 15c: Tiefenfilter
- 16: Erweiterung
- 16a: Erweiterung
- 16b: Erweiterung
- 17: Ansatz
- 18: Ringnut
- 19: Ringbund
- 20: Außenumfang
- 21: Fettfüllung
- 22: Füllvolumen

## Patentansprüche

1. Dichteinrichtung (1, 1a, 1b, 1c) für ein Wälzlager mit einem Versteifungsring (2, 2a, 2b) und einem Laufring (3, 3a, 3b), die im Wesentlichen einen L-förmigen Querschnitt aufweisen und einen Ringraum (8) bilden, wobei in dem Ringraum (8) eine an dem Versteifungsring (2, 2a, 2b) fest angeordnete und gegenüber dem Laufring (3, 3a, 3b) mittels einer auf einer Dichtfläche (12) des Laufrings (3, 3a, 3b) umlaufenden Dichtlippe (11) abdichtende elastische Dichtung (10) und zwischen dem Versteifungsring (2, 2a, 2b) und dem Laufring (3, 3a, 3b) ein den Ringraum (8) begrenzender ringförmiger Dichtspalt (9, 9a, 9b) vorgesehen ist, **dadurch gekennzeichnet, dass** der Dichtspalt (9, 9a, 9b) mittels eines ringförmigen Tiefenfilters (15, 15a, 15b, 15c), der an einer axialen Ausprägung (5, 5a) des Versteigungsrings (2, 2a, 2b) nach radial außen abgestützt ist, luftdurchlässig verschlossen ist.

2. Dichteinrichtung (1, 1a, 1b, 1c) nach Anspruch 1, **dadurch gekennzeichnet, dass** der Tiefenfilter (15, 15a, 15b, 15c) aus Filz gebildet ist.

3. Dichteinrichtung (1, 1a, 1b, 1c) nach Anspruch 1 oder 2, **dadurch gekennzeichnet, dass** der Tiefenfilter (15, 15a, 15b) in axiale Richtung formstabil ist.

4. Dichteinrichtung (1, 1a, 1b, 1c) nach einem der Ansprüche 1 bis 3, **dadurch gekennzeichnet, dass** der Tiefenfilter (15. 15a, 15b, 15c) zumindest in einen Teil eines vom Dichtspalt (9, 9a, 9b) gebildeten Dichtspaltvolumens erstreckt ist.

5. Dichteinrichtung (1a, 1b) nach einem der Ansprüche 1 bis 4, **dadurch gekennzeichnet, dass** der Dichtspalt (9a, 9b) nach radial außen ausgebildet ist.

6. Dichteinrichtung (1, 1c) nach einem der Ansprüche 1 bis 4, **dadurch gekennzeichnet, dass** der Dichtspalt (9) in axiale Richtung ausgebildet ist.

7. Dichteinrichtung (1) nach einem der Ansprüche 1 bis 6, **dadurch gekennzeichnet, dass** der Versteifungsring und/oder der Laufring (3) an dessen den Dichtspalt (9) bildenden Umfang einen in Richtung des Ringraums (8) umgelegten Ansatz (17) aufweist, der in eine zu dieser komplementären Ringnut (18) des Tiefenfilters (15) eingreift.

8. Dichteinrichtung (1, 1a, 1b, 1c) nach einem der Ansprüche 1 bis 7, **dadurch gekennzeichnet, dass** die Dichtlippe (11) gegenüber ihrer Dichtfläche (12) mittels einer in die Dichtung (10) eingebrachten Ringfeder (14) vorbelastet ist.

9. Dichteinrichtung (1, 1a, 1b, 1c) nach einem der Ansprüche 1 bis 8, **dadurch gekennzeichnet, dass** axial benachbart zu der Dichtlippe (11) eine mit einem Innenring des Drehlagers einen Dichtkontakt bildende weitere umlaufende Dichtlippe (13) an der Dichtung (10) vorgesehen ist.

10. Dichteinrichtung (1c) nach einem der Ansprüche 1 bis 9, **dadurch gekennzeichnet, dass** der Ringraum (8) zwischen Tiefenfilter (15c) und der auf dem Laufring (3, 3a, 3b) dichtenden Dichtlippe (11) zumindest teilweise mit Schmiermittel befüllt ist.

11. Dichteinrichtung (1, 1a, 1b, 1c) nach einem der Ansprüche 1 bis 10, **dadurch gekennzeichnet, dass** der Tiefenfilter (15, 15a, 15b, 15c) mit hydrophobem Material beschichtet oder getränkt ist.
